# EUROPÄISCHE PATENTSCHRIFT

(11) **EP 0 609 486 B1**
(45) Veröffentlichungstag und Bekanntmachung des Hinweises auf die Patenterteilung: **25.10.1995**
(21) Anmeldenummer: 93113240.1
(22) Anmeldetag: 19.08.1993
(51) Int. Cl.: A47J 43/25

(54) **Reibe für Nahrungs- und Genussmittel, insbesondere für Fruchtschalen und Gewürze**
Grater for food products, in particular for grating fruit rinds and spices
Râpe pour des produits comestibles, en particulier pour râper l'écorce de fruits et des épices

(30) Priorität: 05.02.1993 DE 9301607 U; 09.07.1993 DE 9310232 U
(43) Veröffentlichungstag der Anmeldung: 10.08.1994
(73) Patentinhaber: GEBRÜDER FUNKE KG, D-59846 Sundern (DE)
(72) Erfinder: Funke, Peter, D-59846 Sundern (DE)
(74) Vertreter: Patentanwälte Ostriga & Sonnet

(56) Entgegenhaltungen:
- DE-C- 51 938
- DE-C- 804 113
- DE-U- 8 233 223

## Beschreibung

Die Erfindung bezieht sich auf eine Reibe nach dem Oberbegriff des Anspruchs 1.

Aus der DE-PS 51 938 aus dem Jahre 1889 ist eine Muskatnußreibe bekannt, bei der dem Mußkatnußhalter, einem etwa becherartigen Gebilde mit darin geführtem Stößel, ein mit diesem über die Reibfläche hin und her geführter Reiniger zugeordnet ist. Dieser Reiniger ist als formschlüssig mit dem Muskatnußhalter verbindbare Platte ausgebildet, die zur Reibfläche weisende Fortsätze aufweist, welche die zwischen den zahnartigen Reibelementen haften gebliebenen Teilchen der Muskatnuß mit der Bewegung des Halters selbsttätig entfernt.

Da einfache Zähne als Reibwerkzeuge nicht sehr wirksam sind, werden zum Abreiben von Partikeln von insbesondere Citrus-Fruchtschalen oder Gewürzen, wie etwa Muskatnüssen, bevorzugt Reiben verwendet, deren Reibfläche mit zahlreichen, von scharfen Kanten oder Zacken umgebenen Reibeöffnungen versehen sind. Die Reibeöffnungen sind dabei sehr zahlreich und klein, da möglichst feine, mit der Zunge nicht oder kaum tastbare Partikel abgeschabt werden sollen, die zur Geschmacksnuancierung der Speise dienen, der sie beigegeben werden. Derartige Reiben verfügen jedoch nicht über Reiniger.

Ein Gerät der eingangs genannten Art entsprechend der DE-PS 51 938 könnte aus verschiedenen Gründen von einer derartigen Reibe die haften gebliebenen Partikel nicht zuverlässig entfernen. Denn der bekannte Reiniger wäre grundsätzlich nur in der Lage, die zwischen den Reibwerkzeugen befindlichen Partikel zu erfassen, und dies auch nur dann, wenn die Reibwerkzeuge in zur Reiberichtung parallelen Reihen angeordnet sind, was jedoch bei den an zweiter Stelle erwähnten Reiben nicht der Fall ist, bei denen zur Erzielung optimaler Reibleistung sehr viele Reibwerkzeuge auf Lücke versetzt zueinander angeordnet sind. Außerdem wären die über die Reibfläche geführten Fortsätze des Reinigers auch nicht in der Lage, die Reibeöffnungen selbst zu erfassen. Dies wäre jedoch wünschenswert, weil die kleinen Reibeöffnungen besonders leicht zum Verstopfen neigen, insbesondere dann, wenn feuchtes, klebriges Gut wie von Citrusschalen abgerieben wird. Infolgedessen nimmt mit zunehmendem Verstopfungsgrad der Reibeöffnungen die Reibleistung des Geräts ab. Dies bedeutet auch, daß zur Erzielung desselben Effekts mehr Reibebewegungen auszuführen sind als unbedingt notwendig wären, wenn die Reibeöffnungen frei wären.

Der Erfindung liegt folglich die Aufgabe zugrunde, eine Reibe der im Oberbegriff des Anspruchs 1 näher umrissenen Art anzugeben, die unter Einsatz einfacher Mittel die beschriebenen Nachteile erheblich vermindert bzw. vermeidet.

Eine Reibe der vorausgesetzten Art, die diese Aufgabe löst, ist im Patentanspruch 1 angegeben.

Der Reiniger in Form einer Bürste ist am Reibenkörper selbst stets sicher aufbewahrt und im Bedarfsfall sofort zur Hand. Mit der Bürste als Reiniger ist es nun auf einfache Weise - vor allem unabhängig von einem Schneidguthalter, wie er bisher zur Funktion des Reinigers erforderlich war - möglich, nicht nur die Zwischenräume zwischen den Reibwerkzeugen, sondern vor allem auch die Reibeöffnungen wirksam zu reinigen bzw. von anhaftendem Reibegut zu befreien. Vorzugsweise sind deshalb die Borsten der Bürste besonders biegesteif, z.B. indem sie ziemlich kurz sind, und weisen einen den Durchmesser der Reibeöffnungen - vorzugsweise nennenswert - unterschreitenden Durchmesser auf. Nach Gebrauch der Bürste und ggf. gründlicher Reinigung der Reibe läßt sich die Bürste mit einem Handgriff in unmittelbar körperlichem Kontakt an der Reibe wieder verstauen. Auf einfache Weise ist die Bürste sodann unverlierbar an der Reibe gehalten, so daß sie praktisch nicht verlorengehen kann, wenn man die Reibe bei Nichtgebrauch etwa in der Küchenschublade aufbewahrt.

Weitere Ausgestaltungen und vorteilhafte Weiterbildungen des Erfindugsgedankens sind Gegenstand der sonstigen Unteransprüche. Sie verstehen sich auch aus der nachfolgenden Beschreibung mehrerer in den Zeichnungen dargestellter Ausführungsbeispiele. Es zeigen:
- Fig. 1: eine Reibe entsprechend einer ersten Ausführungsform in Unteransicht mit lösbar unter dem Reibenkörper angesteckter Bürste,
- Fig. 2: einen Querschnitt durch die Reibe nach Fig. 1 entlang der dortigen Schnittangabe II-II.
- Fig. 3: eine Reibe entsprechend einer zweiten Ausführung mit abnehmbar am Reibenkörperrand angeklipster bzw. angehakter Bürste in Ansicht,
- Fig. 4: eine Einzelheit der lösbaren Befestigung der Bürste an der Reibe nach Fig. 3.
- Fig. 5: eine Reibe entsprechend einer dritten Ausführung mit am Reibenkörper längsverschieblich angelenkter Bürste in Ansicht, und
- Fig. 6: einen Längsschnitt durch die Reibe nach Fig. 5 entlang der dortigen Schnittlinie VI-VI.

Eine insgesamt mit 10 bezeichnete Reibe zum Abschaben von insbesondere Fruchtschalen oder Muskatnüssen umfaßt einen Reibenkörper 11 mit einer unmittelbar daran angeschlossenen Bürste 12, die im wesentlichen leistenförmig gestaltet ist und vorzugsweise eine etwa der Breite des Reibenkörpers 11 entsprechende Länge aufweist, so daß ihre Borsten 28 bei einem Strich längs über die Reibfläche 14 diese zur Gänze überstreichen können.

Der Reibenkörper 11 besteht aus einem Blech- oder Kunststoff-Formteil, etwa in Gestalt einer profilierten Platte mit einem Griffteil 13 und einem Arbeitsteil, der eigentlichen Reibfläche 14. Über diese sind zahlreiche, insbesondere von scharfen Kanten oder Zacken umgebene Reibeöffnungen 15 dicht sowie in zueinander versetzten Reihen und Spalten verteilt angeordnet, was in den Figuren schematisch angedeutet ist. Die Reibeöffnungen 15 sind relativ klein und neigen deshalb leicht zur Verstopfung, wenn, wozu diese Reibe 10 besonders bestimmt und geeignet ist, feinste Partikel von Fruchtschalen, Gewürzen od. dgl. abgerieben werden.

Um den bei herkömmlichen Reiben bislang nicht verwertbaren Abrieb möglichst gering zu halten, ist der Reibe 10 ein abstreifender Reiniger in Form einer Bürste 12 zugeordnet, die dazu benutzt wird, im Anschluß an den Reibevorgang oder auch wiederholt während der jeweiligen Gebrauchsdauer der Reibe 10 die Reibfläche 14 abzukehren und dabei vor allem zugleich auch die verstopften Reibeöffnungen 15 wieder freizulegen.

Die Bürste 12 ist im wesentlichen leistenförmig gestaltet. Sie weist einen zugleich als Griffleiste dienenden Bürstenkörper 25 und Borsten 28 auf, die sich entlang einer Längsseite des Bürstenkörpers 25 erstrecken. Die so verfügbare 'Borstenleiste' weist eine etwa der Breite des Reibenkörpers 11, jedenfalls aber eine mindestens der Breite der Reibfläche 14 entsprechende Länge auf, so daß ihre Borsten 28 bei Bewegung in Längsrichtung der Reibe 10 über die Reibfläche 14 diese zur Gänze überstreichen können.

Damit die Bürste 12 möglichst effizient wirken kann, sind ihre Borsten 28 besonders biegesteif und knickfest sowie im Durchmesser deutlich kleiner als die Reibeöffnungen 15, damit sie wie Nadeln in diese einstechen bzw. sie durchstechen können.

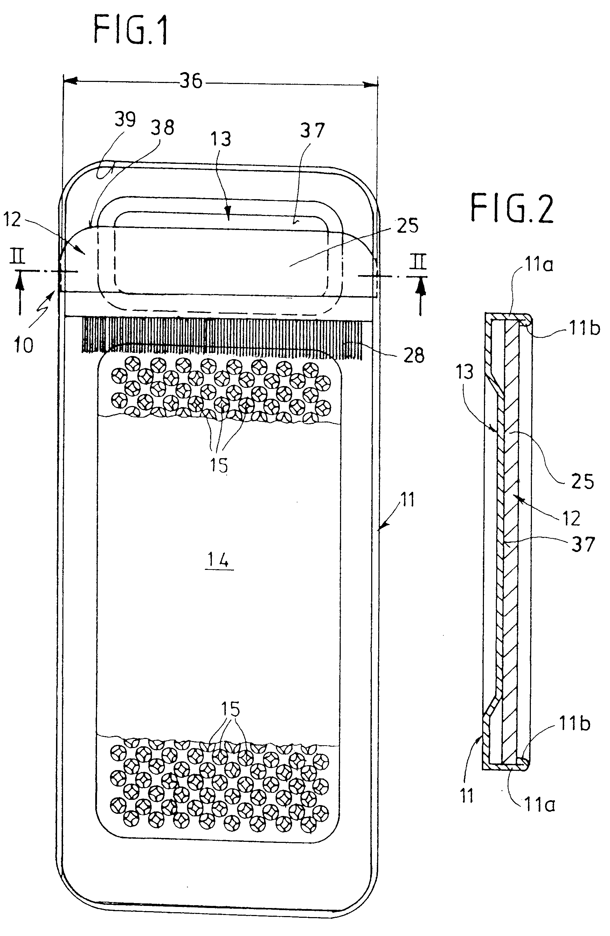

Um Bürste 12 und Reibenkörper 11 bei Nichtgebrauch zusammenzuhalten, weist die Bürste 12 des ersten Ausführungsbeispiels entsprechend den Figuren 1 und 2 eine 'Länge über alles' auf, die im wesentlichen dem queren lichten Innenmaß 36 des Reibenkörpers 11 zwischen gegenüberliegenden Seitenrändern 11a entspricht. Beim dargestellten Ausführungsbeispiel ist die Anordnung konkret so getroffen, daß der leistenförmige Bürstenkopf 25 wenige Zehntel Millimeter Übermaß besitzt, so daß er kraftschlüssig zwischen die hinreichend elastisch nachgiebigen Ränder 11a des Reibenkörpers eingeklemmt werden kann. Auch kann eine formschlüssige Unterstützung der Haltelage der Bürste dadurch erfolgen, daß der Reibenkörperrand 11a mit seinen umgerollten bzw. umgebördelten Randkanten 11b die Bürste 12 bzw. den Bürstenkopf 25 formschlüssig überfängt (Fig. 2).

Wie Fig. 2 weiterhin zeigt, kann auch der Griffabschnitt 13 des Reibenkörpers 11 vorteilhaft an der Halterung der Bürste 12 mitwirken. Er ist als einwärts verformte Vertiefung ausgebildet, deren Innenfläche 37 als Bürstenkopfauflage dient. Wählt man nun den Projektionsabstand zwischen dieser Fläche 37 und den zu ihr hin weisenden Randumbiegungen 11b so, daß er etwas geringer ist als der Bürstenkopf 25 dick, so läßt sich dieser - vorausgesetzt, er ist zumindest geringfügig flexibel, unter Biegevorspannung in der in Fig. 2 dargestellten Aufbewahrungslage sicher halten.

Im übrigen ist die Außenkontur 38 des Bürstenkopfes 25 auf die Innenkontur 39 der Reibkörperinnenseite in deren Endbereich abgestimmt, so daß sich der Bürstenkopf 25 passend in das Reibenende schieben läßt und dort in vorteilhafter Weise vom Griffabschnitt 13 vollkommen geschützt überdeckt ist, so daß sich die Reibe 10 problemlos auch mit angesteckter Bürste 12 benutzen läßt, ohne daß diese bei der Arbeit verschmutzen kann.

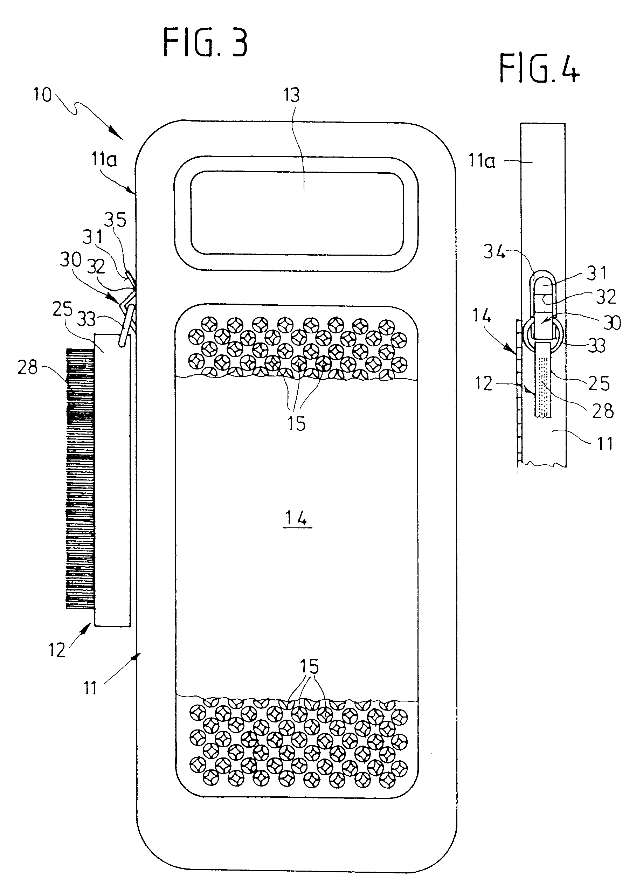

Bei dem zweiten Ausführungsbeispiel, welches in den Figuren 3 und 4 dargestellt ist, ist an einem Seitenrand 11b des Reibenkörpers 11 eine vorzugsweise elastisch eigenfedernde Zunge 30 angeordnet, vorzugsweise aus der Wand 11a freigeschnitten und/oder ausgeklinkt. Wie insbesondere Fig. 4 zeigt, ist sie derart geschweift bzw. abgewinkelt geformt, daß sie einen sich automatisch selbst verriegelnden Haken 31 ausbildet. Dies ist insbesondere dann erreicht, wenn der Bogenabschnitt bzw. Knick 32 zwischen sich und der Außenfläche der Reibenwand 11b einen Spalt beläßt, der schmaler ist als die Stärke einer an der Bürste 12 angebrachten Öse 33 oder sogar wieder in die durch den Freischnitt der Federzunge 30 geschaffene Wandausnehmung 34 eintaucht. Das freie Ende 35 hingegen ist nach auswärts gebogen, um die Öse 33 einzufangen, wenn die Bürste 12 damit an den Reibenköper 11 angesteckt wird.

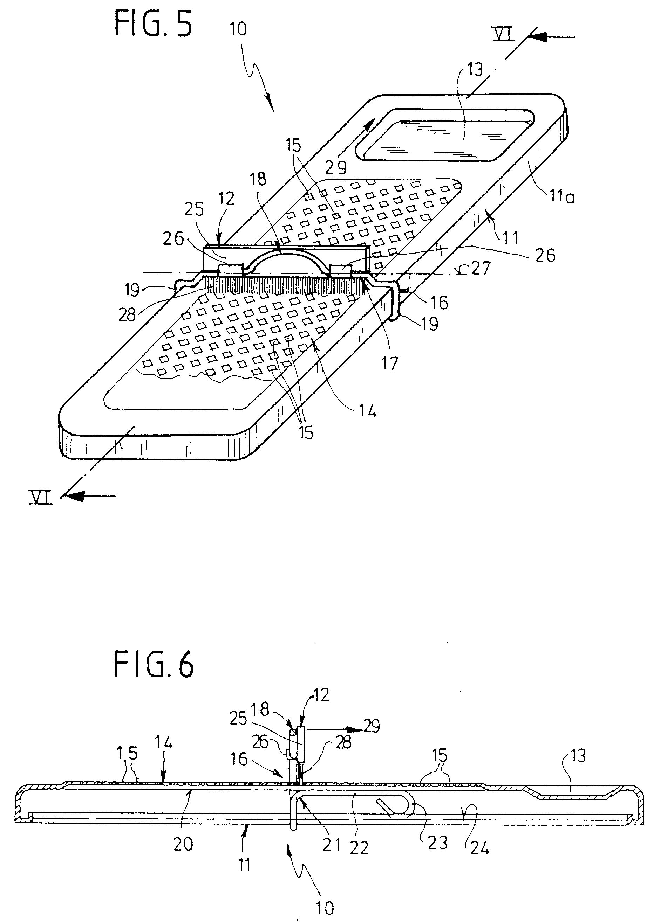

Um Bürste 12 und Reibenkörper 11 zusammenzuhalten, sieht das dritte Ausführungsbeispiel entsprechend den Figuren 5 und 6 einen besonderen Schlitten 16 vor, an dem die Bürste 12 angebracht ist und der seinerseits an dem Reibenkörper 11 verschieblich geführt ist. Entsprechend der Zeichnung besteht der Schlitten 16 im wesentlichen aus einem Metalldraht, der vielfältig und in besonderer Weise gebogen ist.

Ein zentraler Abschnitt 17 des Schlittens 16 übergreift wie ersichtlich die Reibfläche 14, und zwar beim Ausführungsbeispiel in Querrichtung des Reibenkörpers 11. Mittig weist der zentrale Abschnitt 17 eine Kröpfung 18 auf, die - wie es Fig. 5 deutlich macht - die Bürste 12 in Querrichtung des Reibenkörpers 11, also in Längsrichtung des zentralen Abschnittes 17, im wesentlichen unverrückbar hält. Aus der Reibfläche 14 abgebogene Schenkel 19 umgreifen die Ränder 11a des Reibenkörpers 11, so daß schon diese Ausführung geeignet wäre, den Schlitten 16 im Prinzip unverlierbar, wenngleich abnehmbar, am Reibenkörper 11 zu haltern.

Das Ausführungsbeispiel ist noch weitergehend ausgestaltet, wie insbesondere Fig. 6 verdeutlicht. Danach verlaufen die Ränder 11a des Reibenkörpers 11 umgreifenden Schenkel 19 des Schlittens 16 auf der Reibenunterseite bis zur Rückseite 20 der Reibfläche, gegen die sie (bei 21) abgebogen sind und von dieser Abbiegung 21 aus in einen an der Unterseite der Reibfläche 14 anliegenden Gleitabschnitt 22 übergehen, der letztlich in ein Federauge 23 mündet, welches sich druckschlüssig und vorzugsweise durch Eigenfederung kraftschlüssig im unteren Randkantenfalz 24 abstützt. Dieser Art der Halterung und des langen Schenkels 22 wegen ist der gesamte Schlitten 16 gegen Kippen gesichert am Reibenkörper 11 geführt.

Die Bürste 12, deren leistenförmiger Bürstenkopf 25 aus Kunststoff oder aus einem Blechformteil bestehen kann, weist zwei daran angebrachte Befestigungslaschen 26 auf, mit deren Hilfe die Bürste 12 an den zentralen Abschnitt 17 des Schlittens 16 angesteckt werden kann. Diese Verbindung kann in Gestalt einer lösbaren Klipsverbindung ausgeführt sein, wodurch die Bürste 12, z.B. für eine besonders gründliche Reinigung der Reibe 10, vorübergehend vom Schlitten 16 abgenommen werden könnte.

Im übrigen ist die Halterung der Bürste 12 am zentralen Steg 17 des Schlittens 16 so getroffen, daß sie um ihre Anlenkachse 27 am Schlitten 16 zumindest geringfügig verschwenken kann, und zwar selbsttätig, wenn beim Ausführungsbeispiel die Bürste 12 durch Druck gegen den zentralen Abschnitt 17 des Schlittens 16 in Richtung auf den Griffteil 13 zu bewegt wird. Dies hat zur Folge, daß sich die Borsten 28 entgegen der mit 29 bezeichneten Bewegungsrichtung leicht nach hinten stellen und somit über die Reibfläche 14 gezogen und nicht geschoben werden. Deshalb können sich die Borsten 28 nicht in den Reibeöffnungen 15 verfangen.

Der mittlere Bogen des Zentralabschnittes 17 verhindert, daß die Bürste 12 bei Bewegung des Schlittens 16 vom Griff 13 weg, also entgegen der Richtung 29, ebenfalls kippt. Hier schlägt der Bürstenkopf 25 in im wesentlichen lotrechter Stellung der Bürste 12 an den Bogen 18 an. Will man auch hier die erwähnte Schräglage der Bürste 12 erreichen, braucht lediglich abweichend vom dargestellten Ausführungsbeispiel der zentrale Abschnitt 18 längs der Achse 27 gerade durchzulaufen und z.B. eine kleine Abkröpfung nach unten anzuordnen sein, mit der die Bürste an einer unerwünschten Bewegung in Richtung der Anlenkachse 27 gehindert werden könnte.

## Patentansprüche

1. Reibe (10) für Nahrungs- und Genußmittel, insbesondere für Fruchtschalen von namentlich Citrusfrüchten sowie für Gewürze wie beispielsweise Muskatnüsse, mit einer Vielzahl von auf einer Reibfläche (14) angeordneten Reibwerkzeugen und mit einem Reiniger für auf der Reibfläche (14) befindliche Reibgutpartikel, dadurch gekennzeichnet, daß bei Ausbildung der Reibwerkzeuge als kleine, insbesondere von scharfen Kanten oder Zacken umgebene, Reibeöffnungen sowohl zum Abstreifen der auf der Reibfläche (14) befindlichen als auch der in den Reibeöffnungen (15) haftenden Reibgutpartikel der Reiniger als Bürste (12) ausgebildet ist, deren Borsten (28) biegesteif sind und einen den Durchmesser der Reibeöffnungen (15) unterschreitenden Durchmesser aufweisen und daß eine Aufnahme zur ggf. entnehmbaren Halterung der Bürste an dem Reibenkörper selbst ausgebildet ist, der etwa die Gestalt einer profilierten Platte mit einem Griffteil (13) und dem von der Reibfläche (14) gebildeten Arbeitsteil besitzt.

2. Reibe nach Anspruch 1, dadurch gekennzeichnet, daß an dem Reibenkörper (11) eine Steckaufnahme zur Halterung der Bürste (12) angeordnet, ihm insbesondere angeformt ist.

3. Reibe nach Anspruch 2, dadurch gekennzeichnet, daß als Steckaufnahme ein Haken (31) am Reibenkörper (11) angeformt ist, in den die Bürste (12) mittels einer Öse (33) einhakbar ist.

4. Reibe nach Anspruch 3, dadurch gekennzeichnet, daß der Haken (31) aus einer Wand (11b) des Reibenkörpers (11) freigeschnitten und daraus ausgeklinkt ist.

5. Reibe nach Anspruch 4, dadurch gekennzeichnet, daß der Haken (31) wellenförmig oder mehrfach abgekantet derart geformt und dem Wandausschnitt (34) derart zugeordnet ist, daß er eine selbsttätige unverlierbare Klipshalterung der Bürste (12) bewirkt.

6. Reibe nach Anspruch 1, dadurch gekennzeichnet, daß die Halterung von gegenüberliegenden Rändern (11a) des Reibenkörpers (11) gebildet ist, an bzw. zwischen denen die aus einem Bürstenkörper und den Borsten (28) bestehende Bürste (12) form- und/oder kraftschlüssig gehalten ist.

7. Reibe nach Anspruch 6, dadurch gekennzeichnet, daß die Halterung für die Bürste (12) unterhalb der Reibfläche (14) an dem Reibenkörper (11) ausgebildet ist.

8. Reibe nach Anspruch 6 oder 7, dadurch gekennzeichnet, daß der Rand (11a) des Reibenkörpers (11) einen Randkantenfalz (11b) aufweist, auf den der Bürstenkörper (25) hinsichtlich seiner Länge und so abgestimmt ist, daß er vom Randkantenfalz (11b) übergriffen ist.

9. Reibe nach einem der Ansprüche 6 bis 8, dadurch gekennzeichnet, daß die Gesamtdicke der Bürste (12) geringer ist als die Höhe des Randes (11a) des Reibenkörpers (11).

10. Reibe mit einem endseitigen, von Reibeöffnungen freien Griffabschnitt nach einem der Ansprüche 6 bis 9, dadurch gekennzeichnet, daß die Bürste (12) in ihrer Höhe so bemessen ist, daß sie aus ihrer betriebsmäßigen Lage im wesentlichen parallel zur Arbeitsfläche (14) der Reibe (10) umgelegt vollständig unterhalb des Griffabschnitts (13), von diesem abgedeckt, Platz findet.

11. Reibe nach einem der Ansprüche 6 bis 10, dadurch gekennzeichnet, daß die Randkontur (38) des als Griffteil (25) dienenden Bürstenkörpers der Bürste (12) der Innenrandkontur (39) des einen, insbes. des griffseitigen, Endes des Reibenkörpers (11) angepaßt ist.

12. Reibe nach einem der Ansprüche 6 bis 11, dadurch gekennzeichnet, daß der Bürstenkörper (25) unter Biegevorspannung zwischen die randübergreifenden Randkantenumbiegungen (11b) des Randes (11a) des Reibenkörpers (11) und einer dazwischen am Reibenkörper (11) angeordneten Stützfläche (37) einspannbar ist.

13. Reibe nach Anspruch 1 oder 6, dadurch gekennzeichnet, daß die Bürste (12) an einem längs der Reibfläche (14) gleitverschieblich gelagerten Schlitten (16) angeordnet ist.

14. Reibe nach Anspruch 13, dadurch gekennzeichnet, daß der Schlitten (16) aus einem insbesondere aus Draht geformten Bügel besteht, dessen Schenkel (19) die als Halterung dienenden Seitenränder (11a) des Reibenkörpers (11) umgreifen.

15. Reibe nach Anspruch 13 oder 14, dadurch gekennzeichnet, daß der Schlitten (16) Endabschnitte (22, 23) aufweist, die reibflächenrückseitig (20) und/oder in Randkantenfalzen (24) der Reibe (11) gleitverschieblich geführt sind.

16. Reibe nach Anspruch 15, dadurch gekennzeichnet, daß die Endabschnitte (22, 23) des Schlittens (16) kufenartig ausgebildet sind und den Schlitten (16) kippfrei am Reibenkörper (11) führen.

17. Reibe nach einem der Ansprüche 13 bis 16, dadurch gekennzeichnet, daß die Bürste (12) - ggf. lösbar - an den Schlitten (16) angeklipst ist.

18. Reibe nach Anspruch 13 oder einem der folgenden, dadurch gekennzeichnet, daß die Bürste (12) schwenkbar an dem Schlitten (16) gelagert ist, derart, daß ihre Borsten (28) entgegen wenigstens einer der beiden Bewegungsrichtungen (29) des Schlittens (16) zumindest geringfügig schräg auf der Reibfläche (14) aufsetzen.

19. Reibe nach Anspruch 1 oder einem der darauf folgenden, dadurch gekennzeichnet, daß die Länge des Bürstenkörpers (25) im wesentlichen der Breite (36) des Reibenkörpers (11) entspricht und die Länge des Borstenabschnitts (28) der Bürste (12) die Breite der Reibfläche (14) nicht unterschreitet.

## Claims

1. Grater (10) for foodstuffs and luxury foods, and especially for the peels of, in particular, citrus fruits and also for spices such as nutmegs for example, having a plurality of grating tools disposed on a grating surface (14) and having a cleaner for particles of grated material which are located on the grating surface (14), characterized in that, when the grating tools are constructed as small grating apertures surrounded by sharp edges or prongs, for the purpose of stripping off both the particles of grated material located on the grating surface (14) and also those sticking in the grating apertures (15), the cleaner is constructed as a brush (12), the bristles (28) of which are resistant to bending and have a diameter which is less than that of the grating apertures (15), and that a holder is constructed for mounting the brush, optionally in a detachable manner, on the grater body itself which approximately has the shape of a profiled plate with a handle part (13) and the working part formed by the grating surface (14).

2. Grater according to claim 1, characterized in that a push-in holder for mounting the brush (12) is disposed on the grater body (11), and in particular formed onto the latter.

3. Grater according to claim 2, characterized in that a hook (31), into which the brush (12) can be hooked by means of an eye (33), is formed onto the grater body (11) as the push-in holder.

4. Grater according to claim 3, characterized in that the hook (31) is cut free from a wall (11b) of the grater body (11) and disengaged therefrom.

5. Grater according to claim 4, characterized in that the hook (31) is shaped in an undulating or repeatedly bent manner in such a way, and is associated with the cutout (34) in the wall in such a way, that it gives rise to an automatic, non-losable, clip-type mounting for the brush (12).

6. Grater according to claim 1, characterized in that the mounting is formed by opposite edges (11a) of the grater body (11), at or between which edges the brush (12), which consists of a brush-head and the bristles (28), is held in a form-locking and/or force-locking manner.

7. Grater according to claim 6, characterized in that the mounting for the brush (12) is constructed underneath the grating surface (14) on the grater body (12).

8. Grater according to claim 6 or 7, characterized in that the edge (11a) of the grater body (11) has a lateral edge fold (11b) to which the brush body (25) is matched in respect of its length and in such a way that it is engaged over by the lateral edge fold (11b).

9. Grater according to one of claims 6 to 8, characterized in that the overall thickness of the brush (12) is smaller than the height of the edge (11a) of the grater body (11).

10. Grater having a handle portion located at the end and devoid of grating apertures, according to one of claims 6 to 9, characterized in that the brush (12) is so dimensioned, in its height, that it is accommodated, when transferred from its operative position essentially parallel to the working surface (14) of the grater (10), completely underneath the handle portion (13) and so as to be covered by the latter.

11. Grater according to one of claims 6 to 10, characterized in that the edge contour (38) of the brush body of the brush (12), which brush body serves as the handle part (25), is adapted to the inner edge contour (39) of one end, and in particular of the handle end, of the grater body (11).

12. Grater according to one of claims 6 to 11, characterized in that the brush body (25) can be clamped in, under bending-type pretensioning, between those lateral edge bends (11b) of the edge (11a) of the grater body (11) that engage over the edges, and a supporting surface (37) disposed therebetween on the grater body (11).

13. Grater according to claim 1 or 6, characterized in that the brush (12) is disposed on a slide (16) mounted for sliding displacement along the grating surface (14).

14. Grater according to claim 13, characterized in that the slide (16) consists of a clip formed, in particular, from wire, the side-pieces (19) of which engage around the side edges (11a) of the grater body (11) that serve as the mounting.

15. Grater according to claim 13 or 14, characterized in that the slide (16) has end portions (22, 23) which are guided, in a slidingly displaceable manner, on the rear side (20) of the grating surface and/or in lateral edge folds (24) on the grater (11).

16. Grater according to claim 15, characterized in that the end portions (22, 23) of the slide (16) are of skid-like construction and guide the slide (16) in a non-tipping manner on the grater body (11).

17. Grater according to one of claims 13 to 16, characterized in that the brush (12) is clipped on - optionally in a detachable manner - to the slide (16).

18. Grater according to claim 13 or one of the subsequent claims, characterized in that the brush (12) is pivotably mounted on the slide (16) in such a way that its bristles (28) rest on the grating surface (14) at least slightly obliquely towards at least one of the two directions of movement (29) of the slide (16).

19. Grater according to claim 1 or one of the claims subsequent thereto, characterized in that the length of the brush body (25) essentially corresponds to the width (36) of the grater body (11) and the length of the bristle portion (28) of the brush (12) is not less than the width of the grating surface (14).

## Revendications

1. Râpe (10) pour produits alimentaires et de consommation, en particulier pour peaux et pelures de fruits, notamment en particulier des agrumes ainsi que pour des épices, comme par exemple des noix de muscade, avec une pluralité d'outils râpeurs disposés sur une surface de râpage (14), et avec un nettoyeur pour les particules de produit râpé se trouvant sur la surface de râpage (14),
caractérisée en ce que, lorsque les outils râpeurs sont réalisés sous forme de petites ouvertures de râpage, entourées en particulier par des arêtes ou des dents vives, tant pour le raclage des particules de produit à râper se trouvant sur la surface de râpage (14) qu'également adhérant dans les ouvertures de râpage (15), l'organe de nettoyage est réalisé sous forme de brosse (12), dont les soies (28) présentent une rigidité en flexion et présentent un diamètre inférieur au diamètre des ouvertures de râpage (15) et en ce qu'un logement destiné à pouvoir le cas échéant enlever la fixation de la brosse du corps de râpe lui-même est réalisé, ayant à peu près la forme d'une plaque profilée, avec une partie poignée (13) et une partie travailleuse constituée par la surface de râpage (14).

2. Râpe selon la revendication 1,
caractérisée en ce qu'un logement d'enfichage destiné à la fixation de la brosse (12) est disposé sur le corps de râpe (11), en étant en particulier formé sur lui d'un seul tenant.

3. Râpe selon la revendication 2,
caractérisée en ce qu'un crochet (31) est formé, d'un seul tenant, à titre de logement d'enfichage, sur le corps de râpe (11), logement dans lequel la brosse (12) peut être accrochée au moyen d'un oeillet (33).

4. Râpe selon la revendication 3,
caractérisée en ce que le crochet (31) est obtenu par découpage à partir d'une paroi (11b) du corps de râpe (11) et est façonné à partir de celle-ci par encochage.

5. Râpe selon la revendication 4,
caractérisée en ce que le crochet (31) est de forme ondulée ou bien plusieurs fois infléchi, et associé à la section de paroi (34) de manière à provoquer une fixation par encliquetage imperdable automatique de la brosse (12).

6. Râpe selon la revendication 1,
caractérisée en ce que la fixation est constituée par des bords (11a) opposés du corps de râpe (11), sur lesquels, respectivement entre lesquels, la brosse (12) constituée d'un corps de brosse et des soies (28) est maintenue par ajustement de forme et/ou par liaison mécanique.

7. Râpe selon la revendication 6,
caractérisée en ce que la fixation de la brosse (12) est réalisée au-dessous de la surface de râpage (14) sur le corps de râpe (11).

8. Râpe selon la revendication 6 ou 7,
caractérisée en ce que le bord (11a) du corps de râpe (11) présente un pli d'arête de bordure (11b) auquel le corps de brosse (25) est adapté en longueur et de façon être entouré par ce pli d'arête de bordure (11b).

9. Râpe selon l'une des revendications 6 à 8,
caractérisée en ce que l'épaisseur totale de la brosse (12) est inférieure à la hauteur du bord (11a) du corps de râpe (11).

10. Râpe avec une section poignée située à une extrémité, exempte d'ouvertures de râpage, selon l'une des revendications 6 à 9,
caractérisée en ce que la brosse (12) est d'une hauteur faisant qu'elle vient se placer, depuis sa position de fonctionnement, sensiblement parallèlement à la surface de travail (14) de la râpe (10), en allant complètement au-dessous de la section poignée (13), en étant recouverte par celle-ci.

11. Râpe selon l'une des revendications 6 à 10,
caractérisée en ce que le contour de bordure (38) du corps de brosse, servant de partie poignée (25), de la brosse (12) est adapté au contour de bordure intérieure (39) d'une extrémité, en particulier d'une extrémité côté poignée, du corps de râpe (11).

12. Râpe selon l'une des revendications 6 à 11,
caractérisée en ce que le corps de brosse (25) peut être enserré avec une précontrainte de flexion, entre les replis d'arête de bordure (11b) entourant la bordure, de la bordure (11a) du corps de râpe (11) et une surface d'appui (37) disposée entre ces replis sur le corps de râpe (11).

13. Râpe selon la revendication 1 ou 6,
caractérisée en ce que la brosse (12) est disposée sur un chariot (16) montée mobile à coulissement le long de la surface de râpage (14).

14. Râpe selon la revendication 13,
caractérisée en ce que le chariot (16) est constitué d'un étrier en particulier réalisé en fil métallique et dont les branches (19) entourent les bords latéraux (11a), servant de fixation, du corps de râpe (11).

15. Râpe selon la revendication 13 ou 14,
caractérisée en ce que le chariot (16) présente des sections d'extrémité (22, 23) guidées du côté arrière (20) de la surface de râpage et/ou dans des plis d'arête de bordure (24) de la râpe (11), en permettant un déplacement par coulissement.

16. Râpe selon la revendication 15,
caractérisée en ce que les sections d'extrémité (22, 23) du chariot (16) sont réalisées en patins et guident le chariot (16) sur le corps de râpe (11) sans risque de coincement.

17. Râpe selon l'une des revendications 13 à 16,
caractérisée en ce que la brosse (12) est encliquetée - le cas échéant de façon amovible - sur le chariot (16).

18. Râpe selon la revendication 13 ou l'une des revendications suivantes,
caractérisée en ce que la râpe (12) est montée pivotante sur le chariot (16), de manière que ses soies (28) s'appliquent, à l'encontre d'au moins l'une des deux directions de déplacement (29) du chariot (16), au moins légèrement obliquement sur la surface de râpage (14).

19. Râpe selon la revendication 1 ou l'une des revendications suivantes,
caractérisée en ce que la longueur du corps de brosse (25) correspond sensiblement à la largeur (36) du corps de râpe (11) et la longueur de la section de brosse (28) de la brosse (12) n'étant pas inférieure à la largeur de la surface de râpage (14).
